# EUROPEAN PATENT SPECIFICATION

(11) **EP 3 385 720 B1**
(45) Date of publication and mention of the grant of the patent: **02.09.2020**
(21) Application number: 17165075.7
(22) Date of filing: 05.04.2017
(51) Int. Cl.: G01N 35/04, B01L 9/06, G01N 35/10

(54) **VESSEL CARRIER FOR AN AUTOMATED ANALYSIS SYSTEM**
GEFÄSSTRÄGER FÜR EIN AUTOMATISIERTES ANALYSESYSTEM
SUPPORT DE RÉCIPIENT DESTINÉ À UN SYSTÈME D'ANALYTE AUTOMATISÉ

(43) Date of publication of application: 10.10.2018
(73) Proprietor: F. Hoffmann-La Roche AG, 4070 Basel (CH); Roche Diagnostics GmbH, 68305 Mannheim (DE)
(72) Inventor: Cofano, Marco, 6014 Luzern (CH); Eugster, Ivo, 6003 Luzern (CH); Sangermano, Marco, 6010 Kriens (CH)
(74) Representative: Curcio, Mario

(56) References cited:
- EP-A1- 2 732 878
- EP-A1- 2 741 087
- GB-A- 2 404 882
- JP-A- 2006 292 696
- JP-A- 2011 128 163
- US-A1- 2004 195 193
- US-A1- 2013 160 530
- US-A1- 2014 165 645

## Description

### Technical Field

This disclosure relates to a vessel carrier and to an automated laboratory system comprising the vessel carrier.

### Background

Automated laboratory systems for in-vitro diagnostics typically require precise pipetting of test fluids in order to maintain satisfactory analytical accuracy. Usually, pump-controlled aspiration probes are used for aspirating and discharging fluids. In order to minimize the danger of cross-contamination and facilitate probe cleaning, it is desirable to position the probe tip just below the fluid surface of a test fluid contained in a vessel. The test fluid can either be aspirated while keeping the probe stationary or, in case of larger volumes, while lowering the probe further into the vessel so as to maintain the probe tip in the test fluid.

In many cases, fluid levels can greatly vary from one vessel to another so that the probe tip has to be reliably positioned within the fluid before starting any pipetting operation. Hence, it is customary for many applications to detect the fluid level of a test fluid for positioning of the probe.

As known in the art, fluid level detection can be based on various physical principles such as detecting light reflected from the fluid surface or measuring electric characteristics of a probe when put in contact with the fluid. However, in some cases, especially in the case of fluids which are likely to be subject to foam formation and/or in presence of a pierceable septum closing the vessel, the reliability of results obtained by conventional fluid level detection techniques can be unacceptably low. For example, when using a technique based on the change of an electric capacitance of the probe, it is likely to occur that in case foam is present on the surface of a test fluid the foam causes a capacitance change similar to that one of the fluid so that there is no clear discrimination between fluid and foam. Similarly, if test liquid, e.g. in form of droplets is present underneath a closure closing the vessel, this may generate a false signal. Accordingly, there is a risk that air rather than test fluid is aspirated, resulting in undesired pipetting errors.

Methods based on measuring a change of electric resistance, such as e.g. disclosed in US9213011B2 can be more reliable in determining fluid level even in presence of foam and/or a closure.

Normally, vessels containing the test fluids are held by vessel carriers during pipetting and during fluid level detection.

In order to measure changes of electric resistance with higher accuracy and precision, the vessel carrier has to be electrically conductive and in contact with an electric ground.

Vessel carriers usually carry a colour code for conveniently distinguishing a type of vessel carrier from another vessel carrier having the same shape and dimension but a different use. For example, a vessel carrier may be dedicated to vessels containing test samples. Another vessel carrier may be dedicated to vessels containing control samples, another to vessels containing calibration samples, and so on. Thus vessel carriers may have different colours or carry labels of different colours or other distinguishing marks that are easily recognized. Also, vessel carriers typically carry one or more labels, e.g. a barcode or other identification tag, or markings for e.g. identifying the particular vessel carrier or indirectly the vessel or vessels or type of vessels carried by the vessel carrier, or positioning markings for defining the position of individual vessels on a vessel carrier.

In order to make a vessel carrier electrically conductive, a metal such as for example steel or aluminium could be used, as e.g. disclosed in US20140165645A1. This would make however the manufacturing costs higher, would increase also the weight and reduce the handling performance of the vessel carriers.

Polymeric materials containing high concentrations of carbon fibers can be also used. The carbon fibers make however the material black, which remains the dominant colour even when mixing with other pigments. Although plastic materials with low conductivity are available in different colors, the electrical conductivity of these is typically insufficient for fluid level detection. Thus it is not easy to produce vessel carriers of different colours that are sufficiently electrically conductive. Another problem of such materials is that they are mechanically not very resistant and as such subject to deformation. Also they are not very suitable for being injection molded. Extrusion is a preferred method, but this is less precise than injection molding and not suitable for every shape. These materials show low surface bonding performance and are also not very suitable for attaching labels or for laser marking. Also, coating or plating or painting a product made with such a material is not durable and moreover it is also expensive. The advantage of electrical conductivity typical of polymeric materials containing high concentrations of carbon fibers is therefore counterbalanced by several disadvantages.

An inexpensive vessel carrier is here introduced that is not only electrically conductive but is also customizable for identification and/or handling, e.g. by color coding and/or by allowing labels to be attached and/or by enabling marking. Another advantage is that the vessel carrier is also more resistant to mechanical stress, temperature stress and washing conditions and is therefore more durable.

This is achieved by a two-component structure comprising a core component that is electrically conductive and a cover component that is customizable according to claim 1.

Other advantageous aspects of the vessel carrier are reflected in the dependent claims.

An automated laboratory system comprising an analyzer for analyzing test samples and said vessel carrier is also introduced that enables accurate determination of a fluid level in a vessel held by the vessel carrier.

### General description

A vessel carrier according to claim 1 for use in connection to an automated laboratory system is introduced. The vessel carrier comprises an upper side, a bottom side to be placed in contact with an electrical drain of the automated laboratory system and a middle body portion between the upper side and the bottom side, the upper side comprising one or more openings for introducing a respective number of vessels into a respective number of vessel holding positions comprised in the middle body portion, the vessel holding positions comprising walls for holding a respective number of vessels in contact with the walls, the walls extending respectively in correspondence to the one or more openings on the upper side from the bottom side into the middle body portion. The vessel carrier further comprises a two-component structure comprising a core component made of an electrically conductive material, the core component comprising the bottom side and the walls of the one or more vessel holding positions, and a cover component that covers at least part of the core component and is made of a material that is different or has different properties with respect to the material of the core component and is customizable for identification and/or handling, the cover component comprising the upper side. In particular, the electrically conductive material is an electrically conductive polymeric material comprising a mixture of polymer and carbon fiber, where the electrically conductive polymeric material comprises the mixture at a dosage of at least 70%.

An automated laboratory system is also disclosed comprising an analyzer for analyzing biological samples and a vessel carrier carrying one or more vessels in contact with the walls of the vessel holding positions of the core component, the vessels containing test fluids such as biological samples to be analyzed or reagents to be used with the biological samples or mixtures of biological samples and reagents.

The term "test fluid" is herein generally used to indicate a fluid subject to an in-vitro diagnostic test. Such a fluid may be either a test sample, including, e.g. a control sample or a calibrator, or a reagent, or a mixture of a test sample and one or more reagents.

The term "test sample" refers to a biological material suspected of containing one or more analytes of interest and whose detection, qualitative and/or quantitative, may be associated to a clinical condition. The test sample can be derived from any biological source, such as a physiological fluid, including blood, saliva, ocular lens fluid, cerebral spinal fluid, sweat, urine, milk, ascites fluid, mucous, synovial fluid, peritoneal fluid, amniotic fluid, tissue, cells or the like. The test sample can be pretreated prior to use, such as preparing plasma from blood, diluting viscous fluids, lysis or the like; methods of treatment can involve filtration, centrifugation, distillation, concentration, inactivation of interfering components, and the addition of reagents. A test sample may be used directly as obtained from the source in some cases or following a pretreatment and/or sample preparation workflow to modify the character of the sample, e.g. after adding an internal standard, after being diluted with another solution or after having being mixed with reagents e.g. to enable carrying out one or more in vitro diagnostic tests, or for enriching (extracting/separating/concentrating) analytes of interest and/or for removing matrix components potentially interfering with the detection of the analyte(s) of interest.

A "reagent" is a substance used for treatment of a test sample in order e.g. to prepare a test sample for analysis, to enable a reaction to occur, or to enable detection of a physical parameter of the test sample or analyte contained in the test sample. In particular, a reagent can be a substance that is or comprises a reactant, typically a compound or agent capable e.g. of binding to or chemically transforming one or more analytes present in a test sample or an unwanted matrix component of the test sample. Examples of reactants are enzymes, enzyme substrates, conjugated dyes, protein-binding molecules, ligands, nucleic acid binding molecules, antibodies, chelating agents, promoters, inhibitors, epitopes, antigens, and the like. However the term reagent is used to include any fluid that can be added to a test sample including a dilution liquid, including water or other solvent or a buffer solution, or a substance that is used for disruption of specific or nonspecific binding of an analyte to a protein, binding proteins or surfaces.

The term "vessel" is herein used to indicate a container comprising a body and an inner space adapted to receive a test fluid. Thus, the vessel may be a test sample container, a reagent container or a reaction vessel, e.g. a cuvette.

According to an embodiment the vessel is a test sample tube. A "test sample tube" is either a sample collection test tube, also called "primary tube", which is used to receive a test sample such as a blood sample from a patient and to transport the test sample contained therein to an analytical laboratory, or a "secondary tube", which may be used to receive an aliquot of the test sample from a primary tube. A primary sample tube is typically made of glass or plastics, has a closed end and an open end that may be closed by a closure. A secondary tube is typically made of plastics and may have a different size and shape with respect to primary tubes. In particular, secondary tubes may be smaller than primary tubes and be designed to be closed with one type or similar types of closure.

The term "closure" is herein used to indicate any type of cap, comprising screw-type caps and rubber stoppers, which can be opened and/or closed by a pulling/pushing and/or screwing motion respectively.

A "vessel carrier" is a device comprising one or more vessel holding positions configured to receive and hold a respective number of vessels. In particular, the vessel carrier may be a single vessel carrier, also called "puck", comprising only one vessel holding position for carrying one vessel at a time, or a multi-vessel carrier, also called "rack", comprising a plurality of vessel holding positions arranged e.g. in a one-dimensional or two-dimensional array.

According to an embodiment the vessel carrier is a test sample tube carrier such as a single-tube carrier or a tube rack.

A "vessel holding position" is a hollow space extending into the middle body portion of the vessel carrier delimited by lateral walls of appropriate geometry, e.g. a cylindrical wall, by an opening at the upper side of the vessel carrier and possibly by a closed bottom, configured in size and shape, e.g. in cross-section or diameter and depth, to receive at least a lower portion of a vessel and to hold the vessel in an upright position. The geometry of the walls and possibly bottom of the vessel holding position typically reflects the geometry of the walls of the vessel. Ideally the geometry of the vessel holding position is form fit with at least a portion of the geometry of the vessel such as to maximize the surface of contact between the vessel and the walls of the vessel holding position. However the walls do not need to be continuous as long as capable of holding a vessel in position. The walls may comprise for example a window for enabling reading of a label attached to the vessel. The vessel holding position may also comprise additional features such as one or more resilient members or inserts that contribute to hold a vessel in a centered and upright positing within the vessel holding position.

The vessel carrier comprises a two-component structure comprising a core component and a cover component.

The core component comprises at least part of the bottom side of the vessel carrier and at least part of the middle body portion of the vessel carrier comprising the walls of the one or more vessel holding positions.

The core component is made of an electrically conductive material.

A suitable electrically conductive material has an electrical conductivity below 10⁻⁴ Ohm meter (Ω m), preferably below 10⁻⁶ Ω m, or a surface (sheet) resistance below 10⁴ Ohm, preferably below 10² Ohm, when measured at ambient conditions. Examples of such electrically conductive materials are metals such as aluminium, copper, silver, carbon and polymers containing dispersions of conductive materials, e.g. carbon, e.g. in the form of carbon fibers. The list is not exhaustive.

According to the present disclosure the electrically conductive material forming the core component is an electrically conductive polymeric material.

According to the present disclosure the electrically conductive polymeric material comprises a mixture of polymer, e.g. polypropylene, and carbon fiber at a dosage of at least 70% (mixed with additional polymer, e.g. non-conductive polypropylene, to make up 100%) and preferably at a dosage of 100% (without dilution).
The higher the dosage, the higher the electrical conductivity is. Moreover at higher dosages or better at 100% dosage a more homogeneous distribution of the carbon fiber content can be obtained, thereby resulting in a more homogenous electrical conductivity across the core component, particularly between different vessel holding positions.

In alternative to polypropylene other polymers may be used such as polyethylene, polystyrene, acrylonitrile butadiene styrene (ABS), polyurethane, polyolefin elastomer and polyvinyl chloride (PVC).

According to an embodiment the electrically conductive polymeric material has a surface (sheet) electric resistance that is less than 4000 Ohm and typically less than 2000 Ohm.

The cover component covers at least part of the core component and is made of a material that is different or has different properties with respect to the material of the core component and is customizable for identification and/or handling.

The term "customizable for identification and/or handling" means that the material of the cover component is more suitable than the material of the core component for design customization that enables identification of a particular vessel carrier and/or appropriate handling. The term "design customization" includes visual or machine-readable characterization that helps distinguishing between different vessel carriers. The visual or machine readable characterization may include color, or other surface properties, such as shading, reflectance and hardware coding, labeling (surface bonding) or surface marking. Design customization may include also manufacturing properties, e.g. suitability to be injection molded, and durability, e.g. resistance to mechanical stress, temperature stress and washing conditions.

According to an embodiment the cover component is made of a non-electrically-conductive polymer, for example polypropylene or similar material with comparable mechanical and surface properties.

According to an embodiment the cover component comprises any one or more of a carrier identification label or marking, vessel position label or marking, carrier-type label or marking.

According to an embodiment the marking is a laser marking.

According to an embodiment the core component is formed as a first piece and the cover component is formed as a separate second piece designed to form fit with the first piece, to be separable from the first piece and to be replaceable or exchangeable. One advantage of this embodiment is that the number of different vessel carriers needed may be reduced if not used at the same time and manufacturing is also facilitated.

According to an embodiment the core component is formed as a first piece and the cover component is injection molded on top of the first piece to form an inseparable two-component structure together with the first piece.

Inseparable two-component structures may be however obtained also starting from two separately manufactures components, e.g. by permanently joining together the core component formed as a first piece and the cover component formed as a second piece, e.g. using gluing, temperature or ultrasound bonding.

An "automated laboratory system" is an analytical apparatus dedicated to the analysis of test fluids for in vitro diagnostics. Examples of such analytical apparatuses are clinical chemistry analyzers, coagulation analyzers, immunochemistry analyzers, hematology analyzers, urine analyzers and nucleic acid analyzers that are used for the qualitative and/or quantitative detection of analytes present in the test fluids, to detect the result of chemical or biological reactions and/or to monitor the progress of chemical or biological reactions. The analytical apparatus can comprise functional units for pipetting and/or mixing of samples and/or reagents. The analytical apparatus may comprise a reagent holding unit for holding reagent vessels to perform the analysis. Reagents may be arranged for example in the form of containers or cassettes containing individual reagents or group of reagents and placed in appropriate receptacles or positions within a storage compartment or conveyor. It may comprise a consumable feeding unit, e.g. for feeding reaction vessels. The analytical apparatus can further comprise one or more mixing units, comprising e.g. a shaker to shake a vessel containing a test fluid, or a mixing paddle to mix fluids in a vessel or reagent container. The analytical apparatus can further comprise a particular detection system and follow a particular workflow, e.g. execute a number of processing steps, which are optimized for certain types of analysis, e.g. clinical chemistry, immunochemistry, coagulation, hematology, etc.

The analytical apparatus may have different configurations according to the need and/or according to the desired laboratory workflow. Additional configurations may be obtained by coupling a plurality of apparatuses together and/or adding modules. A "module" is a work cell, typically smaller in size and weight than an entire analytical apparatus, which has an auxiliary function to the analytical function of an analytical apparatus and can work only together with an analytical apparatus. In particular, a module can be configured to cooperate with one or more analytical apparatuses for carrying out dedicated tasks of a sample processing workflow, which can occur for example before or after analysis of the test fluid, e.g. by performing one or more pre-analytical and/or post-analytical steps. Examples of said pre-analytical and/or post-analytical steps are loading and/or unloading and/or transporting and/or storing test fluid vessels or vessel carriers carrying test fluid vessels, e.g. sample racks, loading and/or unloading and/or transporting and/or storing reagent vessels or vessel carriers carrying reagent vessels, e.g. reagent cassettes, loading and/or unloading and/or transporting and/or storing and/or washing reaction vessels, e.g. cuvettes, loading and/or unloading and/or transporting and/or storing pipette tips or tip racks, reading and/or writing information bearing labels, e.g. barcodes or RFID tags, washing pipette tips or needles or reaction vessels, e.g. cuvettes, mixing paddles, mixing of test fluids, e.g. biological samples with other fluid, e.g. reagents, solvents, diluents, buffers, decapping, recapping, pipetting, aliquoting, centrifuging, and so on. An example of such a module is a loading and/or unloading unit for loading/unloading vessel carriers.

According to an embodiment the automated laboratory system comprises at least one aspiration probe having an electric capacitance, a positioning mechanism, adapted for moving the aspiration probe relative to a test fluid in a vessel held by a vessel carrier, a voltage source for charging the aspiration probe, and an electric drain in contact with the bottom side of the vessel carrier for discharging said aspiration probe when the aspiration probe contacts the test fluid by generating a discharging current passing from the aspiration probe to the electric drain though the test fluid, the vessel containing the test fluid and the core component of the vessel carrier. The automated laboratory system further comprises an electric circuitry connected to the aspiration probe, adapted to measure the discharging current, a controller, configured to move the aspiration probe into the sample and to determine a level of the test fluid in the vessel based on the measured current.

The lower the electrical conductivity of the core component material of the vessel carrier is the more accurate the determination of the test fluid level can be. Thus it is preferred that the surface (sheet) electric resistance of the core component material is less than about 4000 Ohm, more preferably less than about 2000 Ohm and most preferably less than about 1000 Ohm.

According to an embodiment the automated laboratory system further comprises a reading device for reading an identification label or marking on the cover component of the vessel carrier.

According to an embodiment the automated laboratory system further comprises a transportation system for moving the vessel carrier. The transportation system may comprise a transportation band or a magnetic transportation path or a push/pull mechanism or a shuttle mechanism or a gripping robotic arm or similar transportation mechanism arranged such that a vessel carrier can be moved for bringing a vessel at a time in correspondence to the aspiration probe.

According to an embodiment the bottom side of the vessel carrier comprises an engagement element for engaging with a transport element of the transportation mechanism of the automated laboratory system for moving the vessel carrier. The engagement element may be part of the core component or the cover component.

According to an embodiment the core component of the vessel carrier is magnetic or paramagnetic for enabling magnetic transport of the vessel carrier.

Other and further objects, features and advantages will appear from the following description of exemplary embodiments and accompanying drawings, which serve to explain the principles more in detail.

### Brief description of the drawings

FIG. 1 shows a first example of vessel carrier.
FIG. 2 shows a second example of vessel carrier.
FIG. 3 is an exploded view of the vessel carrier of FIG. 1.
FIG. 4 shows the same components of FIG. 3 during assembly.
FIG. 5 schematically shows an automated laboratory system.
FIG. 6 shows an example of a transport mechanism for moving a vessel carrier.

### Detailed description

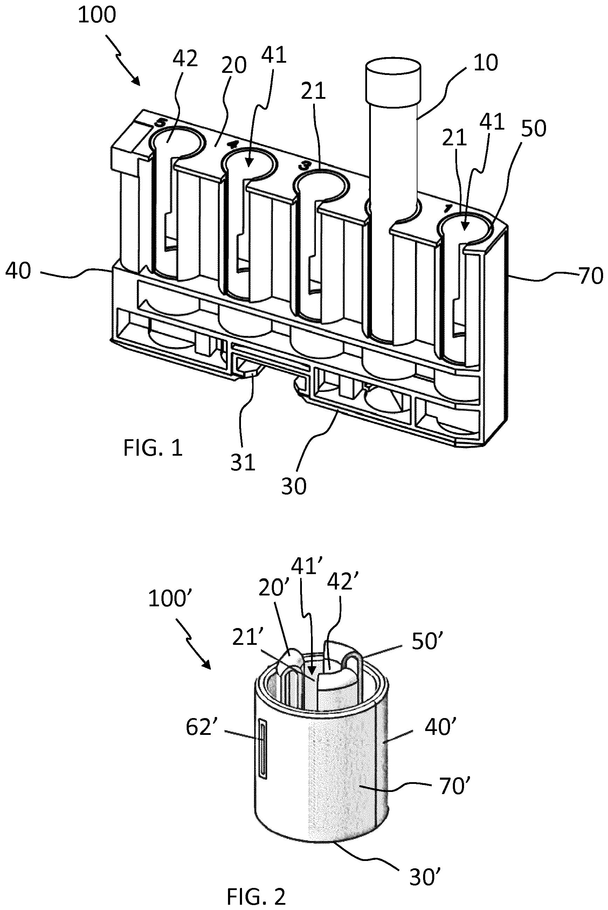

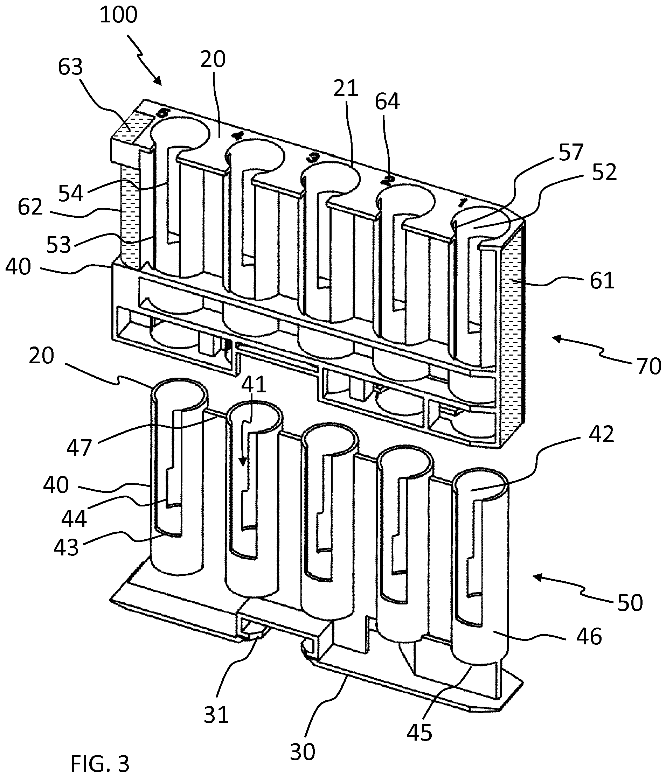

FIG. 1 shows a vessel carrier 100 according to a first embodiment. The vessel carrier 100 comprises an upper side 20, a bottom side 30 and a middle body portion 40 between the upper side 20 and the bottom side 30. The upper side 20 comprises a plurality of openings 21 for introducing a respective number of vessels 10 (only one shown in FIG. 1). The middle body portion 40 comprises a plurality of, in this case five, vessel holding positions 41 comprising walls 42 for holding a respective number of vessels 10 and extending into the middle body portion 40 in correspondence to the openings 21 on the upper side 20 respectively. The vessel carrier 100 comprises a two-component structure comprising a core component 50 and a cover component 70 shown in an exploded view in FIG. 3.

The core component 50 is formed as a first piece and the cover component 70 is formed as a separate second piece designed to form fit with the first piece, to be separable from the first piece and to be replaceable or exchangeable. However, according to an alternative embodiment, the core component 50 and the cover component 70 may be permanently bonded together. According to yet another embodiment, the core component 50 is formed as a first piece and the cover component 70 is injection molded on top of the first piece to form an inseparable two-component structure together with the first piece.

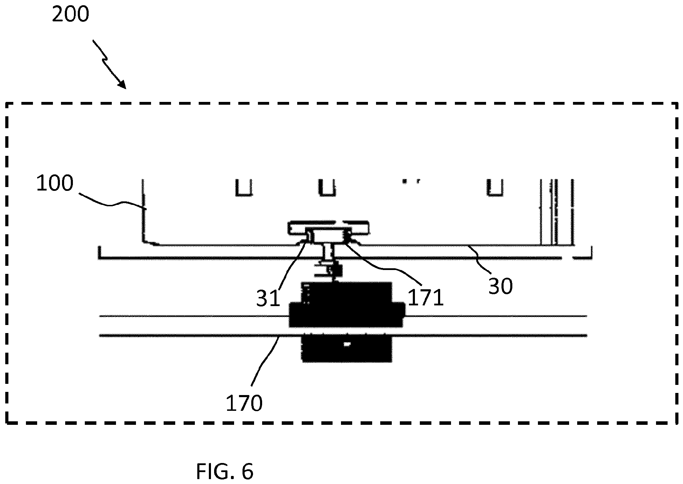

With continued reference to FIG. 1 and FIG. 3, the core component 50 comprises the bottom side 30 and the walls 42 of the vessel holding positions 41. In particular, the vessel holding positions 41 are embodied as hollow cylinders 46 formed by the walls 42, and are held together by intermediate ribs 47 in a single-piece structure together with the bottom side 30. The vessel holding positions 41 further comprise a closed bottom 45 and a lateral aperture in the form of a window 43, through witch a vessel 10 arranged in the vessel holding position can be seen, e.g. in order to read a label of the vessel 10. Reading the label of a vessel 10 may include rotating the vessel 10, e.g. by contacting the vessel 10 with a rotating wheel (not shown) through a second window 44 at the opposite side. The upper rim of the hollow cylinders 46 is open and fits in the opening 21 to form part of the upper side 20.
The bottom side 30 comprises an engagement element 31, shaped as a recess, for engaging with a transport element, e.g. a pin, finger or the like, of an automated laboratory system for moving the vessel carrier 100 as shown in FIG. 6.
The core component 50 is made of an electrically conductive material. In this example, the electrically conductive material is a mixture of polypropylene and carbon fiber, such as currently commercially available from RTP Imagineering Plastics (Catalog No. RTP 0100 PP90025685) used as a concentrate at a dosage of 100%, and having a surface resistance of about 10 Ohm at this dosage..

The cover component 70 is made of a material having different properties with respect to the material of the core component 50 in order to be customizable for identification and/or handling. For example it is made of a non-electrically-conductive polymer such as polypropylene.

The interior of the cover component 70 is designed to form fit with the exterior of core component 50, whereas the exterior is customized according to the need and the particular use in connection to a laboratory automated system.

In particular, the respective middle body portions 40 are designed to fit with each other. In particular, the cover component 70 comprises cylindrical recesses 52, in correspondence to the openings 21, which are complementary in shape to the outer surface of the walls 42 of the vessel holding positions 41. The cylindrical recesses 52 further comprise slits 57 that are complementary in shape to the intermediate ribs 47 and apertures 53, 54 that are arranged to be in correspondence to the windows 43, 44 of the vessel holding positions 41 respectively.

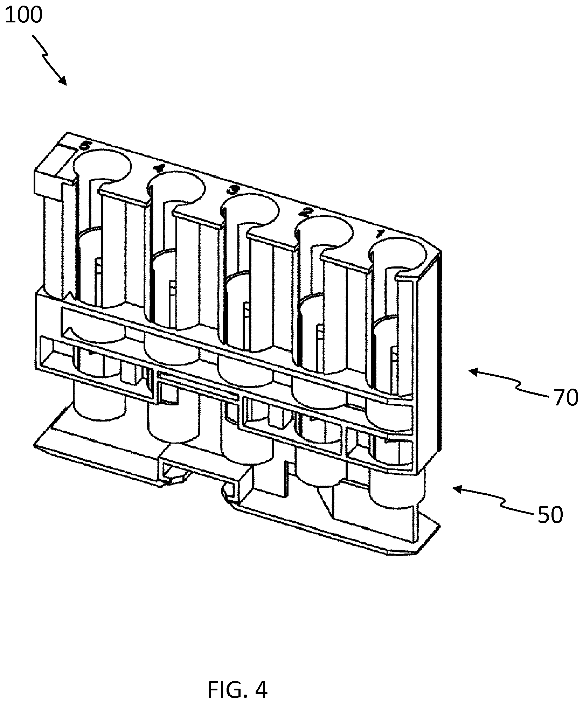

This form fit design can be more greatly appreciated with reference to FIG. 4 showing the core component 50 and the cover component 70 during assembly.

With continued reference to FIG. 3, the cover component 70 further comprises defined customizable zone 61, 62, 63, 64. One zone 62, for example, may be used for attaching a carrier identification label, e.g. a barcode or RFID tag, or for printing an identification marking directly on the surface. Other zones 64 may comprise vessel position markings, e.g. a number identifying each vessel holding position 41. Other zones 61, 63 may comprise a carrier-type label or marking, e.g. a color label or marking or other visual identification marking for distinguishing between vessel carriers 100 intended for different uses, either visually or automatically by machine recognition.
The markings may be applied for example by laser marking technology as known in the art.

FIG. 2 shows another example of vessel carrier 100'. The vessel carrier 100' comprises an upper side 20', a bottom side 30' and a middle body portion 40' between the upper side 20' and the bottom side 30'. The upper side 20' comprises one opening 21' for introducing one vessel 10 (not shown in FIG. 2). The middle body portion 40' comprises one vessel holding positions 41' comprising walls 42' for holding one vessel 10 and extending into the middle body portion 40 in correspondence to the opening 21' on the upper side 20'. The vessel carrier 100' comprises a two-component structure comprising a core component 50' and a cover component 70'.
The core component 50' is made of an electrically conductive material like the core component 50 of FIG. 1. According to an embodiment the core component 50' is magnetic or paramagnetic for enabling magnetic transport of the vessel carrier. The cover component 70' is made of a material having different properties with respect to the material of the core component 50' in order to be customizable for identification and/or handling. For example it is made of a non-electrically-conductive polymer such as polypropylene like the cover component 70. Importantly, the core component 50' comprises the bottom side 30' and the walls 42' of the vessel holding position 41'. The cover component 70' comprises a customizable zone 62' including a carrier identification label, e.g. a barcode or RFID tag, or an identification marking directly on the surface. Moreover the entire surface of the cover component 70' may be customized for identification, e.g. by using different colors for different uses.

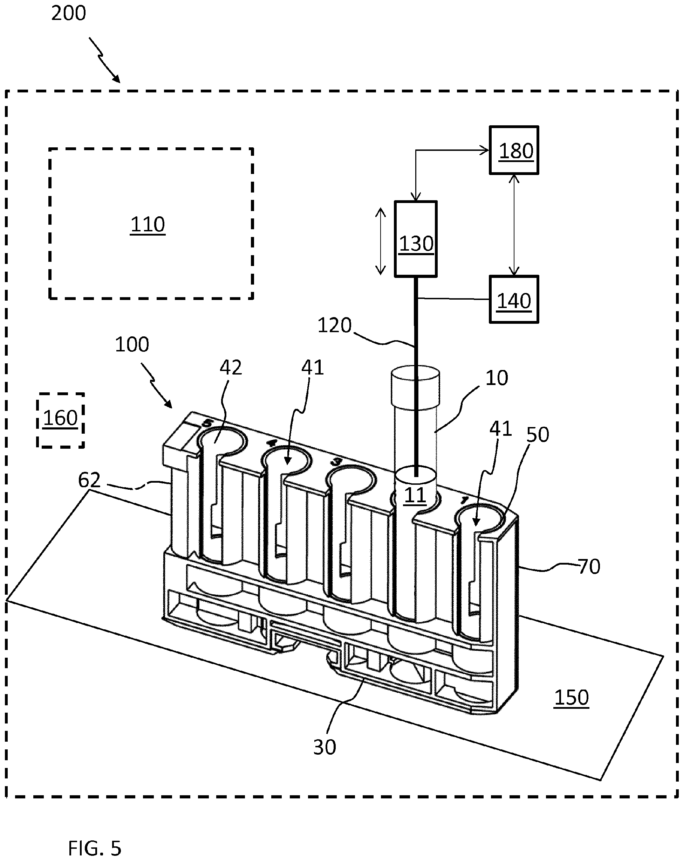

FIG. 5 shows schematically an automated laboratory system 200. The automated laboratory system 200 comprises an analyzer 110 for analyzing biological samples and a vessel carrier 100 like that of FIG. 1 carrying a vessel 10 (only one shown for simplicity) in contact with the walls 42 of a vessel holding position 41 of the core component 50, the vessel 10 containing a test fluid 11 such as a biological sample to be analyzed. The automated laboratory system 200 may be configured to work in connection with a vessel carrier 100' like in FIG. 2 as well.

The automated laboratory system 200 further comprises an aspiration probe 120 having an electric capacitance, a positioning mechanism 130, adapted for moving the aspiration probe 120 relative to the test fluid 11 in the vessel 10, and a voltage source 140 for charging the aspiration probe 120.
The automated laboratory system 200 further comprises an electric drain 150 in contact with the bottom side 30 of the vessel carrier 100 for discharging said aspiration probe 120 when the aspiration probe 120 contacts the test fluid 11 by generating a discharging current passing from the aspiration probe 120 to the electric drain 150 though the test fluid 11, the vessel 10 containing the test fluid 11 and the core component 50 of the vessel carrier 100, including walls 42 and bottom side 30.
The automated laboratory system 200 further comprises an electric circuitry (not shown) connected to the aspiration probe 120, adapted to measure the discharging current, and a controller 180, configured to move the aspiration probe 120 into the test fluid 11 and to determine a level of the test fluid 11 in the vessel 10 based on the measured current.

The automated laboratory system 200 further comprises a reading device 160 for reading an identification label or marking 62 on the cover component 70 of the vessel carrier 100.

FIG. 6 shows an example of transport mechanism 170 for moving the vessel carrier 100 in the automated laboratory system 200. The transport mechanism 170 comprises a moving pin 171, e.g. mounted on a head of a one-dimensional or two-dimensional translation mechanism, for engaging with the engagement element 31 at the bottom side 30 of the vessel carrier 100, and moving the vessel carrier 100 within the automated laboratory system 200, e.g. from an input position to an aspiration position and from the aspiration position to an output position.

Modifications and variations of the disclosed embodiments are certainly possible in light of the above description. It is therefore to be understood, that within the scope of the appended claims, the invention may be practiced otherwise than as specifically devised in the above examples.

## Claims

1. A vessel carrier (100, 100') for use in connection to an automated laboratory system (200), the vessel carrier (100, 100') comprising an upper side (20, 20'), a bottom side (30, 30') to be placed in contact with an electrical drain (150) of the automated laboratory system (200) and a middle body portion (40, 40') between the upper side (20, 20') and the bottom side (30, 30'), the upper side (20, 20') comprising one or more openings (21, 21') for introducing a respective number of vessels (10) into a respective number of vessel holding positions (41, 41') comprised in the middle body portion (40, 40'), the vessel holding positions (41, 41') comprising walls (42, 42') for holding a respective number of vessels (10) in contact with the walls (42, 42'), the walls (42, 42') extending respectively in correspondence to the one or more openings (21, 21') on the upper side (20, 20') from the bottom side (30, 30') into the middle body portion (40, 40'),
wherein the vessel carrier (100, 100') comprises a two-component structure comprising
- a core component (50, 50') made of an electrically conductive material, the core component (50, 50') comprising the bottom side (30, 30') and the walls (42, 42') of the one or more vessel holding positions (41, 41') ; and
- a cover component (70, 70') that covers at least part of the core component (50, 50') and is made of a material that is different or has different properties with respect to the material of the core component (50, 50') and is customizable for identification and/or handling, the cover component (70, 70') comprising the upper side (20, 20');
**characterized in that**
the electrically conductive material is an electrically conductive polymeric material comprising a mixture of polymer and carbon fiber, wherein the electrically conductive polymeric material comprises the mixture at a dosage of at least 70%.

2. The vessel carrier (100, 100') of claim 1 wherein the core component (50, 50') is formed as a first piece and the cover component (70, 70') is formed as a separate second piece designed to form fit with the first piece, to be separable from the first piece and to be replaceable or exchangeable.

3. The vessel carrier (100, 100') of claim 1 wherein the core component (50, 50') is formed as a first piece and the cover component (70, 70') is injection molded on top of the first piece to form an inseparable two-component structure together with the first piece.

4. The vessel carrier (100, 100') of claim 1 wherein the polymer is polypropylene.

5. The vessel carrier (100, 100') according to any of the preceding claims wherein the electrically conductive polymeric material has a surface electric resistance of less than 4000 Ohm or less than 2000 Ohm.

6. The vessel carrier (100, 100') according to any of the preceding claims wherein the cover component (70, 70') is made of a non-electrically-conductive polymer.

7. The vessel carrier (100, 100') according to any of the preceding claims wherein the cover component (70, 70') comprises any one or more of a carrier identification label or marking (62, 62'), vessel position label or marking (64), carrier-type label or marking (61, 63).

8. The vessel carrier (100, 100') according to claim 7 wherein the marking (61, 62, 63, 64) is a laser marking.

9. The vessel carrier (100) according to any of the preceding claims wherein the bottom side (30) comprises an engagement element (31) for engaging with a transport element of an automated laboratory system (200) for moving the vessel carrier (100).

10. Automated laboratory system (200) comprising an analyzer (110) for analyzing biological samples and a vessel carrier (100) according to any of the claims 1 to 9 carrying one or more vessels (10) in contact with the walls (42) of the vessel holding positions (41) of the core component (50), the vessels containing test fluids (11) such as biological samples to be analyzed or reagents to be used with the biological samples or mixtures of biological sample and reagents.

11. The automated laboratory system (200) according to claim 10 further comprising
- at least one aspiration probe (120) having an electric capacitance;
- a positioning mechanism (130) adapted for moving the aspiration probe (120) relative to the test fluid (11) in the vessel (10);
- a voltage source (140) for charging the aspiration probe (120);
- an electric drain (150) in contact with the bottom side (30) of the vessel carrier (100) for discharging said aspiration probe (120) when the aspiration probe (120) contacts the test fluid (11) by generating a discharging current passing from the aspiration probe (120) to the electric drain (150) though the test fluid (11), the vessel (10) containing the test fluid (11) and the core component (50) of the vessel carrier,
an electric circuitry connected to the aspiration probe (120), adapted to measure the discharging current,
- a controller (180) configured to move the aspiration probe (120) into the test fluid (11) and to determine a level of the test fluid (11) in the vessel (10) based on the measured current.

12. The automated laboratory system (200) according to claim 10 or 11 further comprising a reading device (160) for reading an identification label or marking (62) on the cover component (70) of the vessel carrier (100).

13. The automated laboratory system (200) according to any of the claims 10 to 12 further comprising a transportation system (170) for moving the vessel carrier (100).

## Patentansprüche

1. Gefäßträger (100, 100') zur Verwendung in Verbindung mit einem automatisierten Laborsystem (200), wobei der Gefäßträger (100, 100') eine Oberseite (20, 20'), eine Unterseite (30, 30'), die mit einer elektrischen Abzugselektrode (150) des automatisierten Laborsystems (200) in Kontakt gebracht werden kann, und einen mittleren Körperabschnitt (40, 40') zwischen der Oberseite (20, 20') und der Unterseite (30, 30') umfasst, wobei die Oberseite (20, 20') eine oder mehrere Öffnungen (21, 21') zum Einbringen einer entsprechenden Anzahl von Gefäßen (10) in eine entsprechende Anzahl von Gefäßhaltepositionen (41, 41'), die sich in dem mittleren Körperabschnitt (40, 40') befinden, umfasst, wobei die Gefäßhaltepositionen (41, 41') Wände (42, 42') zum Halten einer entsprechenden Anzahl von Gefäßen (10) in Kontakt mit den Wänden (42, 42') umfassen, wobei die Wände (42, 42') jeweils entsprechend der einen oder mehreren Öffnung(en) (21, 21') auf der Oberseite (20, 20') von der Unterseite (30, 30') in den mittleren Körperabschnitt (40, 40') verlaufen,
wobei der Gefäßträger (100, 100') eine Zweikomponentenstruktur umfasst, umfassend
- eine Kernkomponente (50, 50') aus einem elektrisch leitfähigen Material, wobei die Kernkomponente (50, 50') die Unterseite (30, 30') und die Wände (42, 42') der einen oder mehreren Gefäßhaltepositionen (41, 41') umfasst; und
- eine Umhüllungskomponente (70, 70'), die zumindest einen Teil der Kernkomponente (50, 50') umhüllt und aus einem Material gefertigt ist, dass bezogen auf das Material der Kernkomponente (50, 50') verschieden ist oder andere Eigenschaften hat und zur Identifikation und/oder Handhabung kundenspezifisch angepasst werden kann, wobei die Umhüllungskomponente (70, 70') die Oberseite (20, 20') umfasst;
**dadurch gekennzeichnet, dass**
das elektrisch leitfähige Material ein elektrisch leitfähiges polymeres Material ist, das ein Gemisch aus Polymer und Kohlefaser umfasst, wobei das elektrisch leitfähige polymere Material das Gemisch in einer Dosierung von mindestens 70 % umfasst.

2. Gefäßträger (100, 100') nach Anspruch 1, wobei die Kernkomponente (50, 50') als ein erstes Teil ausgebildet ist und die Umhüllungskomponente (70, 70') als ein separates zweites Teil ausgebildet ist, das so gestaltet ist, dass es an das erste Teil so angepasst ist, dass es von dem ersten Teil getrennt und ersetzt oder ausgetauscht werden kann.

3. Gefäßträger (100, 100') nach Anspruch 1, wobei die Kernkomponente (50, 50') als ein erstes Teil ausgebildet ist und die Umhüllungskomponente (70, 70') unter Bildung einer untrennbaren Zweikomponentenstruktur zusammen mit dem ersten Teil auf das erste Teil spritzgegossen ist.

4. Gefäßträger (100, 100') nach Anspruch 1, wobei das Polymer Polypropylen ist.

5. Gefäßträger (100, 100') nach einem der vorstehenden Ansprüche, wobei das elektrisch leitfähige polymere Material einen elektrischen Oberflächenwiderstand von weniger als 4.000 Ohm oder weniger als 2.000 Ohm hat.

6. Gefäßträger (100, 100') nach einem der vorstehenden Ansprüche, wobei die Umhüllungskomponente (70, 70') aus einem nicht elektrisch leitfähigen Polymer gefertigt ist.

7. Gefäßträger (100, 100') nach einem der vorstehenden Ansprüche, wobei die Umhüllungskomponente (70, 70') eine oder mehrere von einer Trägeridentifikationskennzeichnung oder -markierung (62, 62'), Gefäßpositionskennzeichnung oder -markierung (64), Trägerartkennzeichnung oder -markierung (61, 63) umfasst.

8. Gefäßträger (100, 100') nach Anspruch 7, wobei die Markierung (61, 62, 63, 64) eine Lasermarkierung ist.

9. Gefäßträger (100) nach einem der vorstehenden Ansprüche, wobei die Unterseite (30) ein Eingriffelement (31) zum Eingreifen in ein Transportelement eines automatisierten Laborsystems (200) zum Bewegen des Gefäßträgers (100) umfasst.

10. Automatisiertes Laborsystem (200), umfassend ein Analysegerät (110) zum Analysieren biologischer Proben und einen Gefäßträger (100) nach einem der Ansprüche 1 bis 9, der ein oder mehrere Gefäße (10) in Kontakt mit den Wänden (42) der Gefäßhaltepositionen (41) der Kernkomponente (50) trägt, wobei die Gefäße Testfluids (11) wie zu analysierende biologische Proben oder mit den biologischen Proben zu verwendende Reagenzien oder Gemische aus biologischer Probe und Reagenzien enthalten.

11. Automatisiertes Laborsystem (200) nach Anspruch 10, ferner umfassend
- mindestens eine Saugsonde (120) mit einer elektrischen Kapazität;
- einen Positionierungsmechanismus (130), der dafür ausgelegt ist, die Saugsonde (120) bezogen auf das Testfluid (11) in dem Gefäß (10) zu bewegen;
- eine Spannungsquelle (140) zum Laden der Saugsonde (120);
- eine elektrische Abzugselektrode (150) in Kontakt mit der Unterseite (30) des Gefäßträgers (100) zum Entladen der Saugsonde (120), wenn die Saugsonde (120) das Testfluid (11) kontaktiert, durch Erzeugen eines Entladungsstroms, der das Testfluid (11) von der Saugsonde (120) zu der elektrischen Abzugselektrode (150) durchquert, wobei das Gefäß (10) das Testfluid (11) und die Kernkomponente (50) des Gefäßträgers enthält,
- einen elektrischen Schaltkreis, der an die Saugsonde (120) angeschlossen und dafür ausgelegt ist, den Entladungsstrom zu messen,
- eine Steuerung (180), die dafür ausgebildet ist, die Saugsonde (120) in das Testfluid (11) zu bewegen und den Füllstand des Testfluids (11) in dem Gefäß (10) basierend auf dem gemessenen Strom zu bestimmen.

12. Automatisiertes Laborsystem (200) nach Anspruch 10 oder 11, ferner umfassend eine Ablesevorrichtung (160) zum Ablesen einer Identifikationskennzeichnung oder -markierung (62) auf der Umhüllungskomponente (70) des Gefäßträgers (100).

13. Automatisiertes Laborsystem (200) nach einem der Ansprüche 10 bis 12, ferner umfassend ein Transportsystem (170) zum Bewegen des Gefäßträgers (100).

## Revendications

1. Support de récipient (100, 100') pour une utilisation en connexion avec un système de laboratoire automatisé (200), le support de récipient (100, 100') comprenant un côté supérieur (20, 20'), un côté inférieur (30, 30') à placer en contact avec un dissipateur électrique (150) du système de laboratoire automatisé (200) et une partie corps médiane (40, 40') entre le côté supérieur (20, 20') et le côté inférieur (30, 30'), le côté supérieur (20, 20') comprenant une ou plusieurs ouvertures (21, 21') pour introduire un nombre correspondant de récipients (10) dans un nombre correspondant de positions de maintien de récipient (41, 41') comprises dans la partie corps médiane (40, 40'), les positions de maintien de récipient (41, 41') comprenant des parois (42, 42') pour maintenir un nombre correspondant de récipients (10) en contact avec les parois (42, 42'), les parois (42, 42') s'étendant respectivement en correspondance avec les une ou plusieurs ouvertures (21, 21') sur le côté supérieur (20, 20') depuis le côté inférieur (30, 30') dans la partie corps médiane (40, 40'),
dans lequel le support de récipient (100, 100') comprend une structure à deux composants comprenant
- un composant central (50, 50') constitué d'un matériau électriquement conducteur, le composant central (50, 50') comprenant le côté inférieur (30, 30') et les parois (42, 42') des une ou plusieurs positions de maintien de récipient (41, 41') ; et
- un composant formant couvercle (70, 70') qui couvre au moins une partie du composant central (50, 50') et est constitué d'un matériau qui est différent ou a des propriétés différentes du matériau du composant central (50, 50') et est personnalisable pour l'identification et/ou la manipulation, le composant formant couvercle (70, 70') comprenant le côté supérieur (20, 20') ;
**caractérisé en ce que**
le matériau électriquement conducteur est un matériau polymère électriquement conducteur comprenant un mélange de polymère et de fibre de carbone, dans lequel le matériau polymère électriquement conducteur comprend le mélange à une proportion d'au moins 70 %.

2. Support de récipient (100, 100') selon la revendication 1 dans lequel le composant central (50, 50') est formé en tant que première pièce et le composant formant couvercle (70, 70') est formé en tant que seconde pièce distincte conçue pour que sa forme s'ajuste avec la première pièce, pour être séparable de la première pièce et pour être remplaçable ou échangeable.

3. Support de récipient (100, 100') selon la revendication 1 dans lequel le composant central (50, 50') est formé en tant que première pièce et le composant formant couvercle (70, 70') est moulé par injection au-dessus de la première pièce pour former une structure à deux composants inséparables ensemble avec la première pièce.

4. Support de récipient (100, 100') selon la revendication 1 dans lequel le polymère est du polypropylène.

5. Support de récipient (100, 100') selon l'une quelconque des revendications précédentes dans lequel le matériau polymère électriquement conducteur a une résistance électrique de surface de moins de 4000 Ohms ou de moins de 2000 Ohms.

6. Support de récipient (100, 100') selon l'une quelconque des revendications précédentes dans lequel le composant formant couvercle (70, 70') est constitué d'un polymère non électriquement conducteur.

7. Support de récipient (100, 100') selon l'une quelconque des revendications précédentes dans lequel le composant formant couvercle (70, 70') comprend l'un quelconque ou plusieurs parmi une étiquette ou un marquage d'identification de support (62, 62'), une étiquette ou un marquage de position de récipient (64), une étiquette ou un marquage de type de support (61, 63).

8. Support de récipient (100, 100') selon la revendication 7 dans lequel le marquage (61, 62, 63, 64) est un marquage laser.

9. Support de récipient (100) selon l'une quelconque des revendications précédentes dans lequel le côté inférieur (30) comprend un élément de prise (31) pour venir en prise avec un élément de transport d'un système de laboratoire automatisé (200) pour déplacer le support de récipient (100).

10. Système de laboratoire automatisé (200) comprenant un analyseur (110) pour analyser des échantillons biologiques et un support de récipient (100) selon l'une quelconque des revendications 1 à 9 portant un ou plusieurs récipients (10) en contact avec les parois (42) des positions de maintien de récipient (41) du composant central (50), les récipients contenant des fluides de test (11) tels que des échantillons biologiques à analyser ou des réactifs à utiliser avec les échantillons biologiques ou des mélanges d'échantillon biologique et de réactifs.

11. Système de laboratoire automatisé (200) selon la revendication 10 comprenant en outre
- au moins une sonde d'aspiration (120) ayant une capacitance électrique ;
- un mécanisme de positionnement (130) adapté pour le déplacement de la sonde d'aspiration (120) par rapport au fluide de test (11) dans le récipient (10) ;
- une source de tension (140) pour charger la sonde d'aspiration (120) ;
- un dissipateur électrique (150) en contact avec le côté inférieur (30) du support de récipient (100) pour décharger ladite sonde d'aspiration (120) lorsque la sonde d'aspiration (120) entre en contact avec le fluide de test (11) en générant un courant de décharge passant de la sonde d'aspiration (120) au dissipateur électrique (150) à travers le fluide de test (11), le récipient (10) contenant le fluide de test (11) et le composant central (50) du support de récipient,
- un circuit électrique connecté à la sonde d'aspiration (120), adapté à la mesure du courant de décharge,
- un dispositif de commande (180) configuré pour déplacer la sonde d'aspiration (120) dans le fluide de test (11) et pour déterminer un niveau du fluide de test (11) dans le récipient (10) en se basant sur le courant mesuré.

12. Système de laboratoire automatisé (200) selon la revendication 10 ou 11 comprenant en outre un dispositif de lecture (160) pour lire une étiquette ou un marquage d'identification (62) sur le composant formant couvercle (70) du support de récipient (100).

13. Système de laboratoire automatisé (200) selon l'une quelconque des revendications 10 à 12 comprenant en outre un système de transport (170) pour déplacer le support de récipient (100).
